# EUROPÄISCHE PATENTANMELDUNG

(11) **EP 1 671 838 A2**
(43) Veröffentlichungstag der Anmeldung: **21.06.2006**
(21) Anmeldenummer: 05111289.4
(22) Anmeldetag: 25.11.2005
(51) Int. Cl.: B60N 2/24

(54) **Sitzanordnung und Fahrzeug**

(30) Priorität: 16.12.2004 US 13974
(71) Anmelder: DEERE & COMPANY, Moline, Illinois 61265-8098 (US)
(72) Erfinder: Hendron, Scott, 52003, Dubuque (US); Bender, Scott, 50613, Cedar Falls (US); Pope, Jonathan, 07601, Hackensack (US); Branscomb, Matthew, 55044, Lakeville (US)
(74) Vertreter: Löser, Iris

(57) **Zusammenfassung**

Es wird eine Sitzanordnung (100) mit einer Oberkörperstütze (110) und einem Sitzbereich (120) vorgeschlagen, wobei die Oberkörperstütze (110) derart ausgebildet ist, dass sie als eine Rückenstütze, wenn eine Bedienungsperson eine erste Arbeitsstellung einnimmt, und als eine Frontstütze dienen kann, wenn sich die Bedienungsperson eine zweite Arbeitsstellung einnimmt, und der Sitzbereich (120) derart ausgebildet ist, dass er als eine Sitzfläche dienen kann, wenn die Bedienungsperson ihre erste Arbeitsstellung einnimmt, und keine oder nur eine geringe Stützfunktion zur Verfügung stellt, wenn die Bedienungsperson ihre zweite Arbeitsstellung einnimmt. Darüber hinaus wird ein Fahrzeug, vorzugsweise ein multifunktionelles Arbeitsfahrzeug, vorgeschlagen.

## Beschreibung

Die Erfindung betrifft eine Sitzanordnung mit einer Oberkörperstütze und einem Sitzbereich sowie ein vorzugsweise multifunktionales Arbeitsfahrzeug mit einer solchen Sitzanordnung.

Bekannte Sitze für Arbeitsfahrzeuge sind dafür ausgelegt, dass eine Bedienungsperson während eines Fahrzeugbetriebs eine vollständig sitzende Position einnimmt. Multifunktionale Arbeitsfahrzeuge, wie beispielsweise Lader, welche einen Heckbagger aufweisen, erfordern häufig, dass eine Bedienungsperson zur Steuerung der entsprechenden Fahrzeugfunktionen unterschiedliche Stellungen einnimmt, um beispielsweise nach vorn und hinten schauen zu können. Hierzu ist es häufig vorgesehen, dass derartige Sitze drehbar vorgesehen sind, um an die erforderliche Stellung anpasst werden zu können. Derartige drehbare Sitze erfordern einen großen Bauraum. Insbesondere bei kompakten Nutzfahrzeugen, bei denen der Bauraum für einen drehbaren Sitz nicht ausreicht, ist es daher für die Bedienungsperson zur Steuerung beispielsweise eines Heckbaggers notwendig, eine stehende Position einzunehmen.

Das der Erfindung zugrunde liegende Problem wird darin gesehen, dass drehbare Sitze einen großen Bauraum benötigen und daher insbesondere an kompakten Nutzfahrzeugen nicht eingesetzt werden können, ein stehendes Arbeiten durch eine Bedienungsperson allerdings als unbequem und ermüdend empfunden wird.

Dieses Problem wird erfindungsgemäß durch die Lehre der Patentansprüche 1 bzw. 10 gelöst, wobei in den weiteren Patentansprüchen die Lösung in vorteilhafter Weise weiterentwickelnde Merkmale aufgeführt sind.

Auf diese Weise wird eine Sitzanordnung zur Verfügung gestellt, die einer Bedienungsperson in unterschiedlichen Arbeitspositionen eine annähernd stehende Stellung erlaubt, wie dies bei einem Arbeiten mit einem Multifunktionsfahrzeug wie beispielsweise einem Kompaktlader mit Heckbagger förderlich ist, die Bedienungsperson aber in der Art unterstützt, dass ein weitgehend ermüdungsfreies und ungehindertes Arbeiten möglich ist. Die Sitzanordnung stellt einen ersten Bereich beziehungsweise eine Oberkörperstütze und einen zweiten Bereich bzw. einen Sitzbereich, vorzugsweise in der Art eines Halb-oder Teilsitzes zur Verfügung, der mit der Oberkörperstütze integral ausgebildet ist. Die Oberkörperstütze kann durch einen verhältnismäßig breiten Bereich eines ersten Endbereichs der Sitzanordnung gebildet werden, welcher derart ausgebildet ist, dass er in einer ersten Arbeitsposition als Rückenstütze und in einer zweiten Arbeitsposition als Frontstütze dienen kann. Wird er in der Art einer Rückenstütze verwendet, stützt die Oberkörperstütze einen hinteren Teil des Bedieneroberkörpers, wenn er als eine Frontstütze eingesetzt wird, stützt er einen vorderen Bereich der Bedienungsperson, beispielsweise in der Art, dass sich diese mit ihrem Oberkörper daran anlehnt bzw. diesen zumindest bereichsweise darauf auflegt.

Die Sitzanordnung verjüngt sich vorzugsweise ausgehend von dem ersten Bereich bzw. der Oberkörperstütze und erstreckt sich in einem unteren Bereich in abgewinkelter Art und Weise in Richtung der Bedienungsperson, um eine kurze Stütze bzw. den Sitzbereich zu bilden.

Die Sitzanordnung kann darüber hinaus eine Einrichtung bzw. einen Mechanismus aufweisen, der eine Höhenstellung der Sitzanordnung unterstützt, so dass diese an Bedienungspersonen unterschiedlicher Größe und abweichenden Körperbaus angepasst werden kann.

Um die Arbeitsposition zu wechseln, ist es nun nur erforderlich, dass die Bedienungsperson ihren Körper in die benötigte Stellung dreht, und die Oberkörperstütze entweder als Rücken- oder als Frontstütze verwendet, und den Teilsitz dann zu nutzen, wenn dies passend erscheint.

In der Zeichnung ist ein nachfolgend näher beschriebenes Ausführungsbeispiel der Erfindung dargestellt. Es zeigt:
- Fig. 1: eine perspektivische Darstellung eines multifunktionellen Arbeitsfahrzeugs mit einer Sitzanordnung,
- Fig. 2: die Sitzanordnung aus Figur 1 in einer ersten Stellung,
- Fig. 3: die Sitzanordnung aus Figur 1 in einer zweiten Stellung und

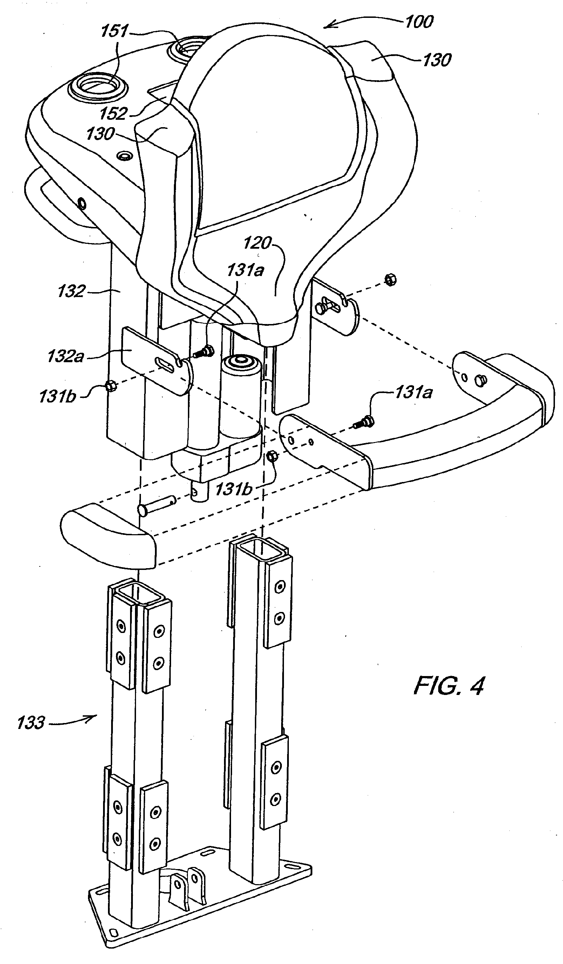

- Fig. 4: eine Explosionsdarstellung dieser Sitzanordnung.

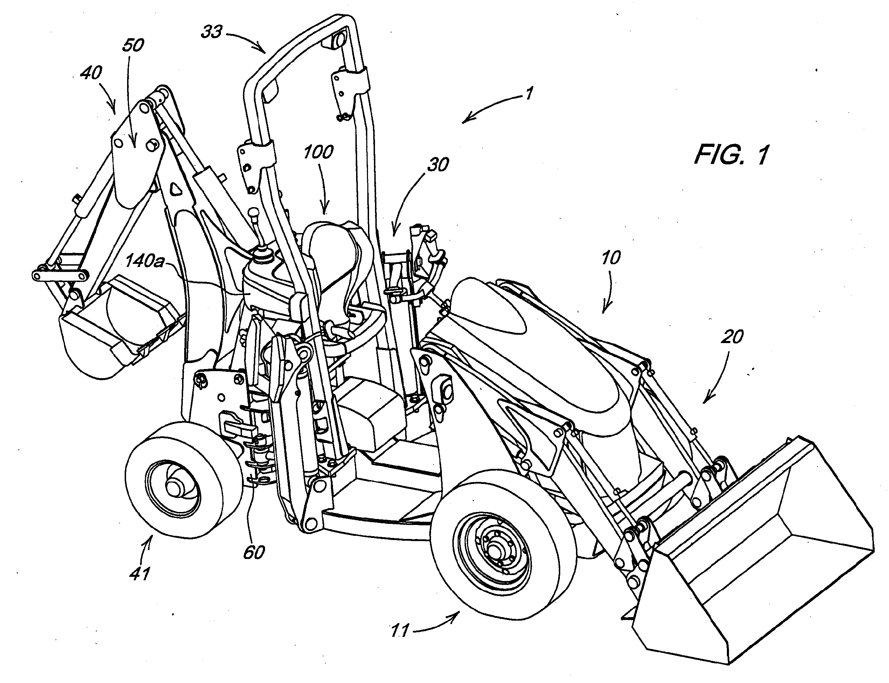

Figur 1 zeigt eine perspektivische Ansicht eines Kompaktarbeitsfahrzeugs bzw. eines multifunktionellen Arbeitsfahrzeug, beispielsweise eines kompakten Gelenkladers mit einem Heckbagger bzw. allgemein ein Fahrzeug 1, das eine exemplarische Ausführungsform der Erfindung (siehe Sitzanordnung 100) aufweist. Das in Figur 1 dargestellte Fahrzeug 1 weist einen Laderbereich 10 eine Kabine bzw. eine Bedienerplattform 30 und einen Heckbaggerbereich 40 auf. Der Laderbereich 10 weist vordere Räder 11 und einen Ladermechanismus 20 auf. In dem Laderbereich 10 sind auch ein Motor (nicht gezeigt), eine Hydraulikpumpe (nicht gezeigt) und ein Getriebe (nicht gezeigt) vorgesehen. Der Heckbaggerbereich 40 weist rückwärtige Räder 41, einen Heckbaggermechanismus 50 und einen Lenkmechanismus 60 auf. Die Bedienerplattform 30 weist Steuerelemente 31, 32, eine Überrollschutz 33 und die Sitzanordnung 100 auf.

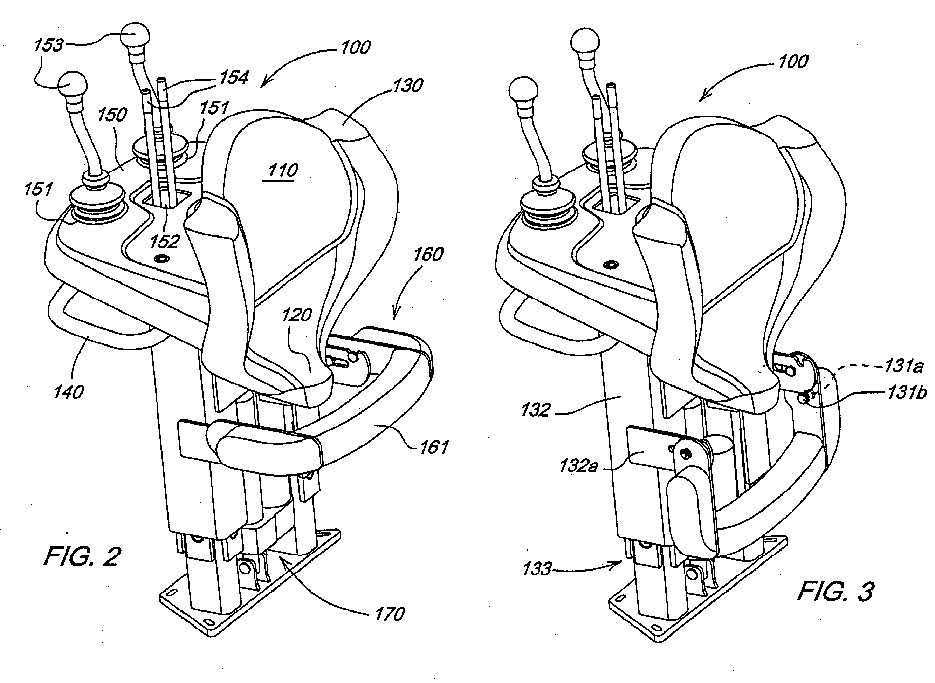

Figur 2 zeigt eine perspektivische Ansicht der Sitzanordnung 100 gemäß Figur 1. Wie es in Figur 2 dargestellt wird, weist die Sitzanordnung 100 des vorliegenden Ausführungsbeispiels der Erfindung einen integrierten Bedienersitz 105 mit einer Oberkörperstütze 110 und einem Halbsitz bzw. einem Sitzbereich 120, Unterarmauflagen bzw. Armstützen 130, eine Stützleiste 140 aus Kunststoff, eine ausgeformte Steuerkonsole 150 mit Öffnungen 151, 152 für Steuerhebel bzw. Steuerelemente 153, 154, einen Sitzleistenzusammenbau 160 und einen Mechanismus 170 zur Unterstützung eine Sitzhöheneinstellung auf. Bei dem Mechanismus 170 gemäß dem vorliegenden Ausführungsbeispiel handelt es sich um einen konventionellen Hydraulikmechanismus, welcher daher hier nicht detaillierter dargestellt wird. In dieser speziellen Ausführungsform wird eine Höheneinstellung letztlich durch Relativbewegungen zwischen einer weiblichen Führung 132, an welcher die Oberkörperstütze 110 angebracht ist und einer männlichen Führung 133 erreicht. Die weibliche Führung 132 gleitet während einer Höheneinstellung auf der männlichen Führung 133.

Die Oberkörperstütze 110 ist derart geformt, dass sie während eines Laderbetriebs, das heißt wenn die Bedienungsperson in Richtung des Laderbereich 10 blickt, eine bequeme Rückenlehne zur Verfügung stellt und eine bequeme Frontstütze für den Oberkörper während eines Heckbaggerbetriebs, das heißt wenn die Bedienungsperson in Richtung des Heckbaggerbereichs 40 blickt, darstellt. In Richtung eines oberen Endbereichs und integriert in die Oberkörperstütze 110 sind Unterarmauflagen bzw. Armstützen 130 vorgesehen. In einem unteren Endbereich des Oberkörperstütze 110 verjüngt sich der Bedienersitz 105 und erstreckt sich in Richtung des Laderbereichs 10, um einen Halb-oder Teilsitz bzw. einen Sitzbereich 120 zu bilden. Der Sitzbereich 120 ist derart geformt und dimensioniert, um eine Teilunterstützung einer Bedienungsperson während eines Laderbetriebs und keine oder nur eine geringe Stütze bzw. keine Behinderung während eines Heckbaggerbetriebs zur Verfügung zu stellen.

Die Oberkörperstütze 110 des Ausführungsbeispiels ist fest an der Steuerkonsole 150 und der weiblichen Führung 132 angebracht, welche fest angebracht Sitzleistenstützhalterungen 132a aufweist. Die Sitzleiste 161 des Sitzleistenzusammenbaus 160 ist wirksam mit den Sitzleistenstützhalterungen 132 verbunden, wie dies aus den Figuren 2 und 3 hervorgeht, und ermöglicht optional eine zusätzliche Unterstützung der Sitzfläche der Bedienungsperson. Wie dies in den Figuren 2 und 3 dargestellt wird, weist die Sitzleiste 161 zwei Stellungen auf, eine Stützstellung, wie sie in Figur 2 illustriert wird, welche eine zusätzliche Sitzflächenunterstützung für eine Bedienungsperson bietet, und einer Aufbewahrungsstellung, wie sie in Figur 3 gezeigt wird, welche eine Behinderung der Bedienungsperson während eines Heckbaggerbetriebs vermeidet. Die Bedienungskonsole 150 mit den Öffnungen 151, 152, durch welche die Steuerelemente 153, 154 für einen Heckbaggerbetrieb ragen, erstreckt sich von der Oberkörperstütze 110 zu dem Heckbaggerbereich 40. Ebenfalls an der weiblichen Führung 132 und der Bedienungskonsole 150 ist eine Stützleiste 140 aus Kunststoff fest angebracht, welche die Form der in Figur 1 gezeigten Verkleidung 104a unterstützt und aufrecht erhält.

Während eines Arbeitseinsatzes des gezeigten Fahrzeugs 1, kann die Fahrzeugbedienungsperson eine Stellung einnehmen, welche nur dem Laderbereich 10 oder dem Heckbaggerbereich 40 zugewandt ist, und sich an die Oberkörperstütze 110 anlehnen, und die Oberkörperstütze 110 entsprechend als eine Rücken- oder Frontstütze nutzen. Während eines Laderbetriebs, kann der Sitzbereich 120 die Sitzfläche der Bedienungsperson teilweise unterstützen, wobei die Sitzleiste 161 optional eine zusätzliche Stütze für die Sitzfläche der Bedienungsperson in der in Figur 2 gezeigten Stellung bieten kann. Während eines Heckbaggerbetriebs ist die Sitzleiste 161 bequemerweise in ihrer in Figur 3 gezeigten Aufbewahrungsstellung angeordnet und die Unterarme der Bedienungsperson sind auf den Armstützen 130 platziert, um einen bequemen Zugang zu den Steuerelementen 153, 154 zu ermöglichen und eine mögliche Ermüdung der Arme der Bedienungsperson zu verringern.

Nach der Beschreibung der bevorzugten Ausführungsform, wird es offensichtlich geworden sein, dass verschiedenen Veränderungen durchgeführt werden können, ohne den Bereich der Erfindung, wie er durch die folgenden Ansprüche beschrieben wird, zu verlassen.

## Patentansprüche

1. Sitzanordnung (100) mit einer Oberkörperstütze (110) und einem Sitzbereich (120), **dadurch gekennzeichnet, dass** die Oberkörperstütze (110) derart ausgebildet ist, dass sie, wenn eine Bedienungsperson eine erste Arbeitsstellung einnimmt, als eine Rückenstütze und als eine Frontstütze dienen kann, wenn die Bedienungsperson eine zweite Arbeitsstellung einnimmt, und der Sitzbereich (120) derart ausgebildet ist, dass er als eine Sitzfläche dienen kann, wenn die Bedienungsperson ihre erste Arbeitsstellung einnimmt, und keine oder nur eine geringe Stützfunktion zur Verfügung stellt, wenn die Bedienungsperson ihre zweite Arbeitsstellung einnimmt.

2. Sitzanordnung nach Anspruch 1, **dadurch gekennzeichnet, dass** die Oberkörperstütze (110) und der Sitzbereich (120) integral ausgebildet sind.

3. Sitzanordnung nach Anspruch 1 oder 2, **dadurch gekennzeichnet, dass** der Sitzbereich (120) als ein Teil- bzw. Halbsitz ausgebildet ist.

4. Sitzanordnung nach einem oder mehreren der vorherigen Ansprüche, **gekennzeichnet durch** zumindest eine Armstütze (130), welche vorzugsweise in die Oberkörperstütze (110) integriert ist und/oder welche vorzugsweise derart ausgebildet ist, dass sie nur in der zweiten Arbeitsstellung zum Einsatz kommt.

5. Sitzanordnung nach einem oder mehreren der vorherigen Ansprüche, **gekennzeichnet durch** eine in die Oberkörperstütze (110) integrierte Steuerkonsole (150), welche zumindest im Wesentlichen auf einer der Bedienungsperson abgewandten Seite der Oberkörperstütze (110) angeordnet ist.

6. Sitzanordnung nach einem oder mehreren der vorherigen Ansprüche, **gekennzeichnet durch** eine verstellbare Sitzleiste (161).

7. Sitzanordnung nach Anspruch 6, **dadurch gekennzeichnet, dass** die Sitzleiste (161) wenigstens zwei Stellungen einnehmen kann, wobei diese Stellungen vorzugsweise eine erste Stellung, zur Stützung der Hüfte einer Bedienungsperson und eine Aufbewahrungsstellung umfassen, in der die Sitzleiste (161) zumindest im Wesentlichen keine stützende Funktion hat.

8. Sitzanordnung nach einem oder mehreren der vorherigen Ansprüche, **dadurch gekennzeichnet, dass** die erste Arbeitsstellung und/oder die zweite Arbeitsstellung zumindest annähernd einer stehenden Position der Bedienungsperson entspricht/entsprechen.

9. Sitzanordnung nach einem oder mehreren der vorherigen Ansprüche, **gekennzeichnet durch** einen Mechanismus (170) zur Unterstützung einer Höhenverstellung.

10. Fahrzeug, vorzugsweise ein multifunktionelles Arbeitsfahrzeug, mit einer Sitzanordnung (110) nach einem oder mehreren der vorherigen Ansprüche.
